# EUROPÄISCHE PATENTSCHRIFT

(11) **EP 1 280 616 B1**
(45) Veröffentlichungstag und Bekanntmachung des Hinweises auf die Patenterteilung: **11.01.2006**
(21) Anmeldenummer: 01945014.7
(22) Anmeldetag: 18.04.2001
(51) Int. Cl.: B05D 5/08, B02C 23/20, B29B 9/16, B29B 15/02, B29B 15/06, C08J 3/12

(54) **VERFAHREN UND VORRICHTUNG ZUR VERHINDERUNG VON WANDANHAFTUNGEN IN SCHÄCHTEN BEI DER ZUFÜHRUNG VON PARTIKELN**
METHOD AND DEVICE FOR THE PREVENTION OF WALL ADHERENCES IN SHAFTS ON THE INTRODUCTION OF PARTICLES
PROCEDE ET DISPOSITIF POUR EMPECHER L'ADHERENCE DE PARTICULES SUR LES PAROIS DE CUVES LORS DE L'ACHEMINEMENT DESDITES PARTICULES

(30) Priorität: 28.04.2000 DE 10020583; 28.04.2000 DE 10020579
(43) Veröffentlichungstag der Anmeldung: 05.02.2003
(73) Patentinhaber: BASF Aktiengesellschaft, 67056 Ludwigshafen (DE)
(72) Erfinder: ECKEL, Ägidius, 67150 Niederkirchen (DE); HOFERICHTER, Jens, 68199 Mannheim (DE); SCHLICHTMANN, Rainer, 67067 Ludwigshafen (DE); BARBAN, Josef, 67271 Neuleiningen (DE)
(86) Internationale Anmeldenummer: PCT/EP2001/004379
(87) Internationale Veröffentlichungsnummer: WO 2001/083120

(56) Entgegenhaltungen:
- US-A- 4 425 381

## Beschreibung

Die Erfindung betrifft ein Verfahren zur Verhinderung von Anhaftungen in einem Schacht bei der Zuführung von Kautschukpartikeln und eine Vorrichtung zur Durchführung des Verfahrens.

Bei der Herstellung von schlagfestem Polystyrol oder Styrolcopolymeren wird eine Kautschuklösung in Styrol den Polymerisationsanlagen zugeführt. Zur Auflösung des Kautschuks werden Kautschukballen zerkleinert. Die Zerkleinerung des Kautschuks erfolgt durch Pressen durch eine Lochplatte und Abschlagen mit einem rotierenden Messer. Die Kautschukpartikel gelangen über einen Schacht in den Lösebehälter mit Styrol (A. Echte, Rubber-Toughend Styrene polymers, A Review, ACS Symposium Series 222, American Chemical Society: Washington, DC, 1989, S. 15).

Durch die Rotationsbewegung des Messers wird ein Großteil der Kautschukpartikel nicht senkrecht durch den Schacht in den Lösetank abgeworfen, sondern an die Schachtwand geschleudert, wo sie in Abhängigkeit von der Klebrigkeit des Kautschuks haften bleiben. Im Extremfall können diese Anwachsungen die Durchgängigkeit des Schachtes vollständig blockieren. Eine Folge davon ist ein Ausfall der Zerkleinerungseinheit, verbunden mit Störungen in der gesamten Polymerisationsanlage.

Um dies zu verhindern, werden die Schachtwände vorsorglich in regelmäßigen Zeitintervallen gereinigt. Diese Reinigungsarbeiten sind zeit- und arbeitsintensiv. Die Arbeiten müssen mit Atemschutzmasken durchgeführt werden, wenn Monomeremissionen auftreten können.

Um die Klebrigkeit des Kautschuks herabzusetzen, ist vorgeschlagen worden, übliche Hilfsstoffe wie pulverförmiges Zn-Stearat oder Mineralöl während der Zerkleinerung beizugeben. Da nur Stoffe verwendet werden können, die die Produkteigenschaften des herzustellenden schlagzähen Polystyrols nicht beeinträchtigen, scheidet eine Vielzahl von Hilfsstoffen aus technischen oder Kostengründenaus oder sie können nur in begrenzter Menge zugesetzt werden. Vor allem bei sehr adhäsiven Kautschuktypen und langen Schächten werden sehr große Mengen Pulver oder Mineralöl benötigt.

Es ist auch vorgeschlagen worden die Schachtwände mit Antihaftbeschichtung zu versehen. Dies hat jedoch den Nachteil, dass solche Schichten, da sie meist sehr kratzempfindlich sind, bei Reinigungsarbeiten mit mechanischen Mitteln zerstört werden können.

Eine weitere Möglichkeit wäre, die Anhaftungen durch einen Sprühstrahl abzulösen. Aus US-A 4,425,381 ist eine frei einhängbare Konstruktion von Rohren mit Austrittsöffnungen bekannt. Durch diese Öffnungen können Flüssigkeiten an die Wandungen von Gefäßen gesprüht werden, um den Entladevorgang dieser Gefäße zu beschleunigen. Durch den Sprühnebel kann eine stark angereicherte Lösemittel- oder Monomerenatmosphäre entstehen, welche zusätzliche sicherheitstechnische Vorkehrungen erforderlich machen kann. Die Düsenöffnungen verstopfen erfahrungsgemäß schnell und beeinträchtigen die Wirkung der Düsen. Eine Reinigung des Düsen ist wegen der fehlenden Zugänglichkeit des Schachtes während des Produktionsprozesses nicht möglich. Außerdem stellen die Düsen in den Schacht hereinragende Teile dar, die während eines Reinigungsvorgangs mit mechanischen Hilfsmitteln unter Funkenbildung beschädigt oder abgestoßen werden können. Bei einer Anbringung der Düsen von außen müsste die Schachtwand durchbohrt werden.

Aufgabe der Erfindung war es ein kostengünstiges, flexibles und störungsunanfälliges Verfahren zur Verhinderung von Wandanhaftungen in Schächten bei der Zuführung von Kautschukpartikeln und eine Vorrichtung zur Durchführung des Verfahrens zu entwickeln, das die vorgenannten Nachteile nicht aufweist. Die Vorrichtung sollte insbesondere in bestehende Anlagen ohne Einbußen in der Produktivität und ohne aufwendige Umbaumaßnahmen schnell und einfach eingebaut sowie gegebenenfalls wieder entfernt werden können.

Dementsprechend wurde ein Verfahren zur Verhinderung von Anhaftungen in einem Schacht bei der Zuführung von Kautschukpartikeln gefunden, wobei man die Wandungen des Schachtes mit einem Flüssigkeitsfilm benetzt.

Der Flüssigkeitsfilm kann durch Antragen einer Flüssigkeit tangential an die Wandungen des Schachtes über Rohre, die am unteren Ende mit Längsschlitzen versehen sind, gebildet werden.

Entsprechend einer weiteren Ausführungsform der Erfindung kann man zumindest Teile der Wandungen des Schachtes als poröse Platte ausbilden und mit einem Flüssigkeitsfilm benetzen.

Als poröse Platte eignet sich beispielsweise eine Sintermetallplatte. Sie ermöglicht die spritz- und strahlfreie Benetzung mit einem Flüssigkeitsfilm.

Zusätzlich kann man einen Flüssigkeitsfilm durch Antragen einer Flüssigkeit tangential an die Wandungen des Schachtes über Rohre, die mit Längsschlitzen versehen sind, bilden.

Die Partikel können über eine Zerkleinerungsvorrichtung erzeugt und in den Schacht eingebracht werden.

Das Verfahren eignet sich für Kautschukpartikel, beispielsweise Polybutadien-oder Polyacrylatkautschuke. Als Flüssigkeit für den Flüssigkeitsfilm wird in diesem Falle bevorzugt ein für den Kautschuk geeignetes Lösungsmittel oder Dispergiermittel, bevorzugt Styrol, aliphatische oder cycloaliphatische, z.B. Cyclohexan, oder aromatische Kohlenwasserstoffe, wie Benzol, Toluol oder Ethylbenzol oder Mischungen von Styrol und aliphatischen oder aromatischen Kohlenwasserstoffen, insbesondere Styrol/Ethylbenzol-Mischungen verwendet.

Besonders bevorzugt gibt man mindestens einen Teil des Lösungs-oder Dispergiermittels zusammen mit den Kautschukpartikeln über einen Schacht in einen Lösetank wobei wobei zumindest Teile der Wandungen des Schachtes mit einem Flüssigkeitsfilm benetzt benetzt werden. Somit können sehr große Flüssigkeitmengen zur Verhinderung der Anhaftungen im Schacht ohne zusätzliche Verdünnung der Kautschuklösung verwendet werden. Eine Aufteilung des Gesamtlösungsmittelstroms bei standgeregelten, kontinuierlich betriebenen Lösekesseln auf 1 bis 50 Vol.-%, bevorzugt 1 bis 30 Vol.-%, insbesondere 5 bis 15 Vol.-% für den Flüssigkeitsfilm in der Schachtwand und 99 bis 50 Vol.-%, bevorzugt 99 bis 70 Vol.-%, insbesondere 95 bis 85 Vol.-% für die Direktzuführung in den Lösetank hat sich bewährt. Bei Verwendung von Styrol als Hauptlösungsmittelkomponente wird der Lösungsmittelstrom in der Regel auf ca. 40 bis 80°C vorgewärmt.

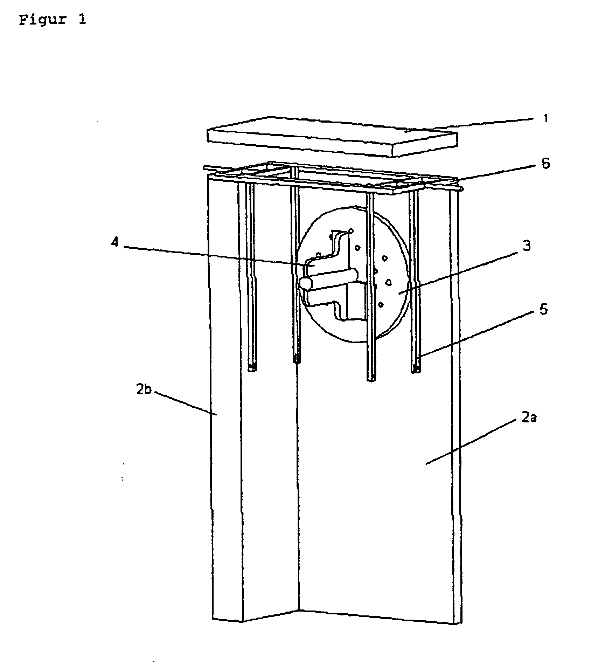

Figur 1 zeigt eine in einen Schacht (2) mit Deckel (1) eingehängte, geeignete Vorrichtung zur Durchführung des erfindungsgemäßen Verfahrens. Die Vorrichtung umfaßt im wesentlichen in einen Schacht frei einhängbare, mit einer Flüssigkeit befüllbare Rohre (5), die entlang den Wandungen des Schachtes (2a, 2b) angeordnet und mit einer Zuführung (6) und mit Austrittsöffnungen (7) versehen sind.

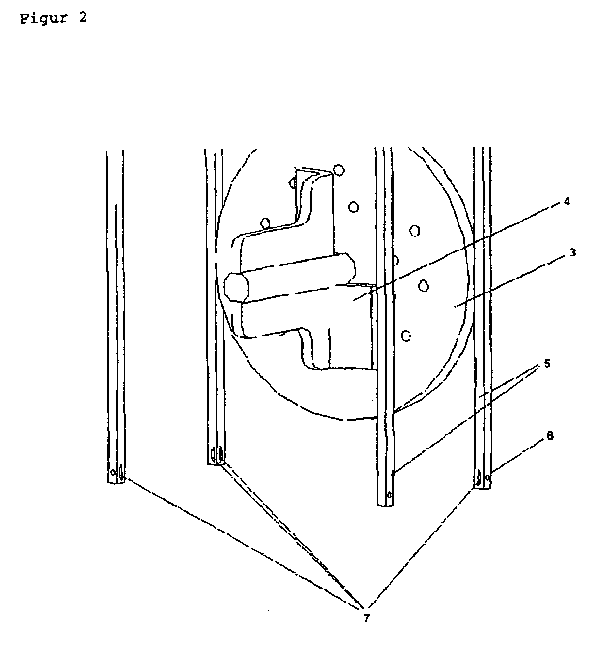

Figur 2 zeigt einen vergrößerten Ausschnitt mit den unteren Rohrenden und den Austrittsöffnungen (7) und (8). Die Geometrie der Austrittsöffnungen (7) wird vorteilhaft so gewählt, dass sich unter den Verfahrensbedingungen überlappende Flüssigkeitsfilme bilden, welche vollflächig die Schachtwand unterhalb der Austrittsöffnung benetzen. Der Vordruck wird so eingestellt, daß die zur Benetzung benötigte Flüssigkeitsmenge aus den Austrittsöffnungen austritt. In der Regel reicht ein Vordruck für die Flüssigkeit von etwa 2 bis 3 bar aus.

Die Größe der Auslassöffnungen (7) wird vorzugsweise so gewählt, daß einerseits ein Verstopfen verhindert und andererseits die Ausbildung von Flüssigkeitsspritzern verhindert wird.

Die Anzahl und Anordnung der Austrittsöffnungen (7) und die Länge der Rohre (5) richten sich nach der Schachtgeometrie und den Stellen mit starken Anhaftungen. Vorzugsweise sind die Austrittsöffnungen (7) am unteren Ende der Rohre als Längsschlitze von etwa 2 mm x 40 mm ausgebildet, wobei die Längsschlitze so angeordnet sind, daß die Flüssigkeit tangential an die Wandungen des Schachtes (2a, 2b) gerichtet wird. Die Rohre (5) können mit zusätzlichen, zu den Wandungen des Schachtes (2a, 2b) gerichteten Austrittsöffnungen (8) versehen sein.

Die Rohre (5) können einen beliebigen Querschnitt aufweisen, vorzugsweise verwendet man Rohre mit einem rundem, rechteckigen oder gleichseitig polyederischen, beispielsweise dreieckigen, quadratischen oder sechseckigen Querschnitt. Ein quadratischer oder rechteckiger Querschnitt der Rohre hat sich dabei im Hinblick auf eine optimale Reinigung als besonders vorteilhaft erwiesen.

Die Anzahl und die Anordnung der Rohre entlang der Wandung des Schachtes hängen im wesentlichen von der Schachtgeometrie ab. Bei einem quadratischen oder rechteckigen Schacht sind die Rohre bevorzugt in den vier Ecken des Schachtes angeordnet.

Sowohl die Zuführung (6) als auch die Zuführung (9) können vorteilhaft als Trage- und Verteilergestell ausgebildet sein, über das die Rohre (5) bzw. die Kammer (11) mit Flüssigkeit versorgt werden. Das Trage- und Verteilergestell kann einfach zwischen Schachtende und Deckel angebracht werden.

Die Austrittsöffnungen (7) der Rohre (5) werden in der Regel unterhalb einer, beispielsweise als Lochscheibe (3) mit rotierendem Messer (4) ausgebildeten, Zufuhrvorrichtung für Partikel angeordnet.

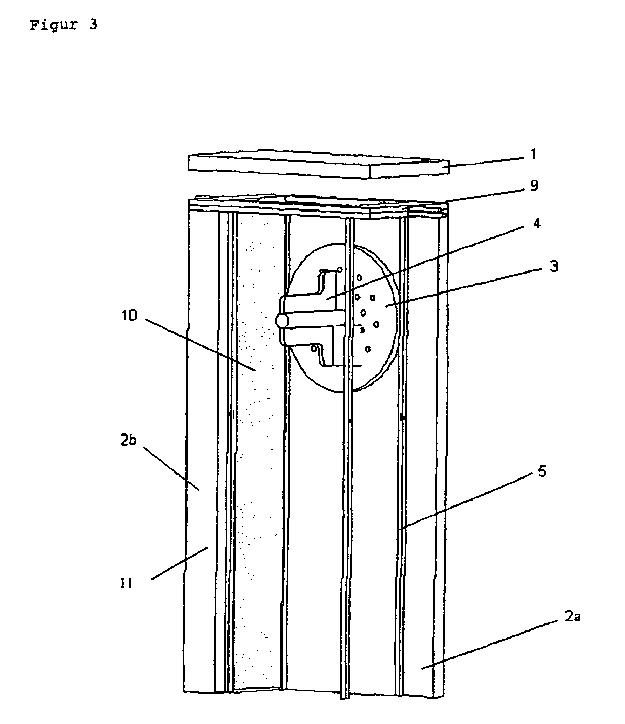

Figur 3 zeigt eine in einen Schacht (2) mit Deckel (1) eingehängte, geeignete Vorrichtung zur Durchführung des erfindungsgemäßen Verfahrens. Die Vorrichtung umfaßt im wesentlichen eine mindestens teilweise aus einer porösen Platte bestehenden Vorbeplankung (10), die zumindest vor einem Teil der Wandungen des Schachtes (2a, 2b) angeordnet und mit dieser eine mit einer Flüssigkeit befüllbare Kammer (11) bildet, sowie einer Zuführung (9).

Diese Ausführungsform empfiehlt sich bei einer Nachrüstung einer bereits vorhandenen Anlage. Um die Öffnung des Schachtes nicht allzu sehr zu verengen, wählt man in der Regel eine Dicke der mit Flüssigkeit befüllbaren Kammer (11) im Bereich von etwa 0,5 bis 2 cm.

Es ist jedoch auch möglich, die Wandung des Schachtes selbst ganz oder teilweise als poröse Platte auszubilden.

Zusätzlich kann die erfindungsgemäße Vorrichtung in einen Schacht frei einhängbare, mit einer Flüssigkeit befüllbare Rohre (5), die entlang den Wandungen des Schachtes (2a, 2b) angeordnet und mit einer Zuführung (6) und mit Austrittsöffnungen (7) versehen sind, umfassen.

Die Rohre (5) können beispielsweise gleichzeitig als Rahmen für die mindestens teilweise aus einer porösen Platte bestehenden Vorbeplankung (10) dienen. Die poröse Platte wird bevorzugt im Bereich der Zufuhrvorrichtung angebracht.

Der Flüssigkeitsfilm des erfindungsgemäßen Verfahrens verhindert wirkungsvoll das Anhaften von Kautschukpartikel, welche durch die Rotationsbewegung des Abstreifmessers an die Schachtwand gelangen.

Die erfindungsgemäße Vorrichtung besitzt ferner den großen Vorteil, dass sie ohne Stillstandzeiten der Anlage jederzeit schnell und einfach montiert und demontiert werden kann, ohne daß an dem Schacht gebohrt, gefräst oder Einbauten angebracht werden müssen. Bestehende Aggregate können ohne aufwendige An- und Umbaumaßnahmen und ohne nennenswerte Stillstandszeiten nachgerüstet werden, um auch Kautschuktypen mit hoher Adhäsionsneigung verarbeiten zu können.

Die Vorrichtung ermöglicht es, den Flüssigkeitsfilm gezielt an Stellen starker Anhaftungen anzutragen und eignet sich auch für langgezogene Schächte. :

### Beispiel 1

Eine Vorrichtung gemäß Figur 1 wurde in einen ca. 1900 mm langen Schacht einer Kautschuklösevorrichtung mit einem lichten Maß von 600x300 mm eingebaut. Die Rohre (5) wurden aus Quadratrohren 20x20 mm mit einer Wandstärke von 2 mm und einer Länge von 900 mm gefertigt und exakt in die vier Ecken des Schachtes eingepaßt. Die frontseitigen Austrittsöffnungen (7) wurden als 15 mm lange Schlitze ausgeführt und erlauben durch ihre Gestaltung ein spritzfreies Austreten der Flüssigkeit und ein großflächiges Benetzen der Schachtwand. Die der Schachtwand zugewandten Öffnungen (8) wurden als Bohrungen mit einem Durchmesser von 3 mm realisiert. Alle Austrittsöffnungen befinden sich einer Tiefe von 850 mm, gemessen vom oberen Schachtrand.

Ein Teilstrom von ca. 1.000 Litern mit einer Temperatur von 40-80°C wurde dem Zulauf des Lösetanks entnommen und bei einem Vorlaufdruck von ca. 1,5 bar. über die vier Rohre (5) an die Wandungen des Schachtes geleitet.

Durch die vollflächige Benetzung der Wandung konnte ein Anhaften der zerkleinerten Kautschukteilchen und somit ein Verstopfen des Schachtes unterhalb des rotierenden Messers dauerhaft vermieden werden.

### Beispiel 2:

Eine Vorrichtung gemäß Figur 3 wurde in einen ca. 1900 mm langen Schacht mit einem lichten Maß von 600x300 mm eingebaut. Die beiden Stirnseiten (2b) wurden in einem Abstand von 20 mm zur Schachtwand vollständige beplankt. Die Beplankung der oberen 250 mm wurde auf beiden Seiten als Druckkammer ausgeführt. Die Kammerwandung zum Schachtinneren hin ist durch Sintermetallplatten (10) gebildet worden. Die Sintermetallplatten weisen eine Porosität von 31% auf und haben eine Dicke von 10 mm.

Während des Betriebes wurde die Druckkammer mit Öl bei einem Vordruck von 1,5 bar beaufschlagt. Aus den Sintermetallplatten, welch die Kammerwandung bilden, treten pro Kammer etwa 10 l/h Öl aus und erzeugen einen geschlossenen Flüssigkeitsfilm über die Sintermetallplatten sowie an der beplankten Schachtwand unterhalb der Sintermetallplatten

Die zuvor regelmäßig notwendigen Reinigungsarbeiten der Schachtwand konnten durch diese Vorrichtung auch bei Kautschuken, die sehr zur Anhaftung neigen komplett vermieden werden.

### Beispiel 3:

Als besonders vorteilhaft hat sich eine Anordnung erwiesen, welche sowohl die in Beispiel 1 als auch die in Beispiel 2 beschriebene Vorrichtung beinhaltet.

## Patentansprüche

1. Verfahren zur Verhinderung von Anhaftungen in einem Schacht bei der Zuführung von Kautschukpartikeln, **dadurch gekennzeichnet, daß** man die Wandungen des Schachtes mit einem Flüssigkeitsfilm benetzt, wobei als Flüssigkeit ein für den Kautschuk geeignetes Lösungsmittel oder Dispergiermittel verwendet wird.

2. Verfahren nach Anspruch 1, **dadurch gekennzeichnet, daß** man den Flüssigkeitsfilm durch Antragen einer Flüssigkeit tangential an die Wandungen des Schachtes über Rohre, die am unteren Ende mit Längsschlitzen versehen sind, bildet.

3. Verfahren nach Anspruch 1, **dadurch gekennzeichnet, daß** man zumindest Teile der Wandungen des Schachtes als poröse Platte ausbildet und mit einem Flüssigkeitsfilm benetzt.

4. Verfahren nach Anspruch 3, **dadurch gekennzeichnet, daß** man als poröse Platte eine Sintermetallplatte verwendet.

5. Verfahren nach Anspruch 3 oder 4, **dadurch gekennzeichnet, daß** man zusätzlich einen Flüssigkeitsfilm durch Antragen einer Flüssigkeit tangential an die Wandungen des Schachtes über Rohre, die mit Längsschlitzen versehen sind, bildet.

6. Verfahren nach einem der Ansprüche 1 bis 5, **dadurch gekennzeichnet, daß** man die Partikel über eine Zerkleinerungsvorrichtung erzeugt und in den Schacht einbringt.

7. Verfahren nach einem der Ansprüche 1 - 6, **dadurch gekennzeichnet, daß** man als Flüssigkeit Styrol, aliphatische, cycloaliphatische oder aromatische Kohlenwasserstoffe oder Mischungen von Styrol und aliphatischen, cycloaliphatischen oder aromatischen Kohlenwasserstoffen verwendet.

8. Verfahren zur Herstellung von Kautschuklösungen aus Kautschukpartikeln, **dadurch gekennzeichnet, daß** man mindestens einen Teil des Lösungsmittels zusammen mit den Kautschukpartikeln über einen Schacht in einen Lösetank zugibt, wobei zumindest Teile der Wandungen des Schachtes mit einem Flüssigkeitsfilm benetzt werden.

9. Vorrichtung zur Durchführung des Verfahrens nach einem der Ansprüche 1-7 umfassend einen Schacht und in den Schacht frei einhängbare, mit einer Flüssigkeit befüllbare Rohre (5), die entlang den Wandungen des Schachtes (2a, 2b) angeordnet und mit einer Zuführung (6) und mit Austrittsöffnungen (7) versehen sind.

10. Vorrichtung nach Anspruch 9, **dadurch gekennzeichnet, daß** die Austrittsöffnungen (7) am unteren Ende der Rohre als Längsschlitze ausgebildet sind, wobei die Längsschlitze so angeordnet sind, daß die Flüssigkeit tangential an die Wandungen des Schachtes (2a, 2b) gerichtet wird.

11. Vorrichtung nach Anspruch 9 oder 10, **dadurch gekennzeichnet, daß** die Rohre (5) mit zusätzlichen, zu den Wandungen des Schachtes (2a, 2b) gerichteten Austrittsöffnungen (8) versehen sind.

12. Vorrichtung nach Anspruch 9 umfassend eine mindestens teilweise aus einer porösen Platte bestehenden Vorbeplankung (10), die zumindest vor einem Teil der Wandungen des Schachtes (2a, 2b) angeordnet und mit diesen eine mit einer Flüssigkeit befüllbare Kammer (11) bildet.

13. Vorrichtung nach Anspruch 12 umfassend Rohre (5), die mit als Längsschlitzen ausgebildeten Austrittsöffnungen (7) versehen sind, wobei die Längsschlitze so angeordnet sind, daß die Flüssigkeit tangential an die Wandungen des Schachtes (2a, 2b) gerichtet wird.

14. Vorrichtung nach einem der Ansprüche 9 bis 13, **dadurch gekennzeichnet, daß** vier Rohre (5) mit rundem oder polyederischem Querschnitt in den Ecken eines quadratischen oder rechteckigen Schachtes (2) angeordnet sind.

15. Vorrichtung nach einem der Ansprüche 9 bis 14, **dadurch gekennzeichnet, daß** die Zuführung (9) und/oder (6) als Trage- und Verteilergestell ausgebildet ist.

16. Vorrichtung nach einem der Ansprüche 9 bis 15, **dadurch gekennzeichnet, daß** Austrittsöffnungen (7) der Rohre (5) unterhalb einer als Lochscheibe (3) mit rotierendem Messer (4) ausgebildeten Dosiervorrichtung für Partikel angeordnet sind.

17. Vorrichtung zur Auflösung von Kautschuk, umfassend eine Vorrichtung nach einem der Ansprüche 9-15 und eine Kautschukzerkleinerungseinheit, die in dem über einem Lösetank angebrachten Schacht (2) angeordnet ist und eine Dosiervorrichtung nach Anspruch 16 aufweist.

## Claims

1. A process for inhibiting agglutination in a upright duct when rubber particles are introduced, which comprises wetting the walls of the upright duct with a film of liquid, where the liquid used comprises a dispersing agent or solvent appropriate for the rubber.

2. The process according to claim 1, wherein the film of liquid is formed by directing a liquid tangentially to the walls of the upright duct via tubes which have longitudinal slits at the lower end.

3. The process according to claim 1, which comprises designing at least some parts of the walls of the upright duct as a porous sheet and wetting these with a film of liquid.

4. The process according to claim 3, wherein a sintered metal sheet is used as porous sheet.

5. The process according to claim 3 or 4, wherein a film of liquid is also formed by directing a liquid tangentially to the walls of the upright duct via tubes which have longitudinal slits.

6. The process according to any of claims 1 to 5, wherein the particles are produced via a comminution apparatus and thus introduced into the upright duct.

7. The process according to one of claims 1-6, wherein the liquid used comprises styrene, aliphatic, cycloaliphatic or aromatic hydrocarbons, or a mixture of styrene with aliphatic, cycloaliphatic or aromatic hydrocarbons.

8. A process for preparing rubber solutions from rubber particles, which comprises adding at least some of the solvent together with the rubber particles via an upright duct into a dissolution tank, where at least some parts of the walls of the upright duct have been wetted with a film of liquid.

9. An apparatus for carrying out the process according to any of claims 1-7, comprising an upright duct and tubes (5) which can be inserted, freely suspended, into the upright duct and can be filled with a liquid and which have been arranged along the walls of the upright duct (2a, 2b) and have a feed (6) and have discharge openings (7).

10. The apparatus according to claim 9, wherein the design has the discharge openings (7) as longitudinal slits at the lower end of the tubes, the arrangement of the longitudinal slits being such that the liquid is directed tangentially to the walls of the upright duct (2a, 2b).

11. The apparatus according to claim 9 or 10, wherein the tubes (5) have additional discharge openings (8) directed toward the walls of the upright duct (2a, 2b).

12. The apparatus according to claim 9, comprising an anterior panel (10), at least part of which is composed of a porous sheet and which has been arranged in front of at least part of the walls of the upright duct (2a, 2b) and which forms with these a chamber (11) which can be filled with a liquid, and also a feed (9).

13. The apparatus according to claim 12, comprising tubes (5) which have discharge openings (7) designed as longitudinal slits, where the arrangement of the longitudinal slits is such that the liquid is directed tangentially toward the walls of the upright duct (2a, 2b).

14. The apparatus according to any of claims 9 to 13, wherein four tubes (5) with a round or polygonal cross section have been arranged in the corners of a square or rectangular upright duct (2).

15. The apparatus according to any of claims 9 to 14, wherein the feed (9) and/or (6) has been designed as a supporting and distributing rack.

16. The apparatus according to any of claims 9 to 15, wherein the discharge openings (7) of the tubes (5) have been arranged below an apparatus for feeding particles, designed as a perforated plate (3) with a rotating knife (4).

17. An apparatus for the dissolution of rubber, comprising an apparatus according to any of claims 9-15 and a rubber-comminution unit which has been arranged in an upright duct (2) installed above a dissolution tank, and a feeding apparatus according to claim 16.

## Revendications

1. Procédé pour empêcher la formation d'adhérences dans un puits lors de l'acheminement de particules de caoutchouc, **caractérisé en ce que** l'on mouille les parois du puits avec un film de liquide en utilisant comme liquide un solvant ou un dispersant convenant au caoutchouc.

2. Procédé selon la revendication 1, **caractérisé en ce que** l'on forme le film de liquide par application d'un liquide tangentiellement sur les parois du puits via des tubes qui sont pourvus de fentes longitudinales à l'extrémité inférieure.

3. Procédé selon la revendication 1, **caractérisé en ce qu'**au moins des parties des parois du puits se présentent sous la forme d'une plaque poreuse que l'on mouille avec un film de liquide.

4. Procédé selon la revendication 3, **caractérisé en ce que** l'on utilise une plaque en métal fritté comme plaque poreuse.

5. Procédé selon la revendication 3 ou 4, **caractérisé en ce que** l'on forme en plus un film de liquide par application d'un liquide tangentiellement sur les parois du puits via des tubes qui sont pourvus de fentes longitudinales.

6. Procédé selon l'une quelconque des revendications 1 à 5, **caractérisé en ce que** l'on produit les particules via un dispositif de broyage et on les introduit dans le puits.

7. Procédé selon l'une quelconque des revendications 1 à 6, **caractérisé en ce que** l'on utilise comme liquide du styrène, des hydrocarbures aliphatiques, cycloaliphatiques ou aromatiques ou des mélanges de styrène et d'hydrocarbures aliphatiques, cycloaliphatiques ou aromatiques.

8. Procédé de fabrication de solutions de caoutchouc à partir de particules de caoutchouc, **caractérisé en ce que** l'on ajoute au moins une partie du solvant conjointement avec les particules de caoutchouc via un puits dans un réservoir de dissolution, dans lequel on mouille au moins des parties des parois du puits avec un film de liquide.

9. Dispositif de mise en oeuvre du procédé selon l'une quelconque des revendications 1 à 7, comprenant un puits et des tubes (5) qui peuvent être suspendus librement dans le puits et être remplis d'un liquide, ces tubes étant agencés le long des parois du puits (2a, 2b) et étant pourvus d'une alimentation (6) et d'ouvertures de sortie (7).

10. Dispositif selon la revendication 9, **caractérisé en ce que** les ouvertures de sortie (7) se présentent, à l'extrémité inférieure des tubes, sous la forme de fentes longitudinales, ces dernières étant disposées de sorte que le liquide soit dirigé tangentiellement sur les parois du puits (2a, 2b).

11. Dispositif selon la revendication 9 ou 10, **caractérisé en ce que** les tubes (5) sont pourvus d'ouvertures de sortie supplémentaires (8) dirigées vers les parois du puits (2a, 2b).

12. Dispositif selon la revendication 9, comprenant un pré-revêtement (10) constitué au moins partiellement d'une plaque poreuse, ledit pré-revêtement étant agencé au moins devant une partie des parois du puits (2a, 2b) et formant avec celles-ci une chambre (11) remplissable par un liquide.

13. Dispositif selon la revendication 12, comprenant des tubes (5) qui sont pourvus d'ouvertures de sortie (7) se présentant sous la forme de fentes longitudinales, ces dernières étant agencées de sorte que le liquide soit dirigé tangentiellement sur les parois du puits (2a, 2b).

14. Dispositif selon l'une quelconque des revendications 9 à 13, **caractérisé en ce que** quatre tubes (5) ayant une section transversale ronde ou polyédrique sont agencés dans les coins d'un puits carré ou rectangulaire (2).

15. Dispositif selon l'une quelconque des revendications 9 à 14, **caractérisé en ce que** l'alimentation (9) et/ou (6) se présente(nt) sous la forme d'un bâti porteur et distributeur.

16. Dispositif selon l'une quelconque des revendications 9 à 15, **caractérisé en ce que** les ouvertures de sortie (7) des tubes (5) sont agencées en dessous d'un dispositif de dosage de particules se présentant sous la forme d'un disque perforé (3) avec une lame rotative (4).

17. Dispositif pour dissoudre du caoutchouc, comprenant un dispositif selon l'une quelconque des revendications 9 à 15 et une unité de broyage de caoutchouc, qui est agencée dans le puits (2) disposé au-dessus d'un réservoir de dissolution et présente un dispositif de dosage selon la revendication 16.
